# EUROPEAN PATENT APPLICATION

(11) **EP 4 495 604 A1**
(43) Date of publication of application: **22.01.2025**
(21) Application number: 23770359.0
(22) Date of filing: 27.02.2023
(51) Int. Cl.: G01N 35/10

(54) **INSPECTION DEVICE**

(30) Priority: 17.03.2022 JP 2022043031
(71) Applicant: FUJIFILM Corporation, Tokyo 106-8620 (JP)
(72) Inventor: MIURA, Yoshinobu, Ashigarakami-gun, Kanagawa 258-8538 (JP); IWASAKI, Taiji, Ashigarakami-gun, Kanagawa 258-8538 (JP)
(74) Representative: Dehns Germany Partnerschaft mbB
(86) International application number: PCT/JP2023/007052
(87) International publication number: WO 2023/176400

(57) **Abstract**

An examination apparatus includes: a detecting unit that detects a target substance in a specimen; a specimen dispensing unit that has a sampling nozzle, through which the specimen is suctioned from a specimen collection container and the specimen is discharged to a reaction cell, and a moving mechanism which moves the sampling nozzle; a nozzle imaging camera that captures an image of the sampling nozzle; a notification unit that has an image display function and issues a notification of an error; and a processor. The processor is configured to control the nozzle imaging camera such that the nozzle imaging camera captures an image of the sampling nozzle in a state of holding the specimen after the specimen is suctioned through the sampling nozzle and before the specimen is discharged to the reaction cell and acquires the image of the sampling nozzle from the nozzle imaging camera, determine a state of the specimen on the basis of the image of the sampling nozzle, and cause the notification unit to issue the notification of the error and display the image of the sampling nozzle in a case of determining that the state is abnormal.

## Description

### BACKGROUND OF THE INVENTION

### 1. Field of the Invention

The present disclosure relates to an examination apparatus.

### 2. Description of the Related Art

An examination apparatus that quantitatively or qualitatively detects a target substance in a specimen has been known. Many of such examination apparatuses use an immunoassay principle, and examples thereof include a chemiluminescent enzyme immunological analysis apparatus and a fluorescence immunological analysis apparatus (for example, JP2016-085093A).

Such an examination apparatus performs a detecting process of detecting a target substance in a specimen by detecting luminescence or fluorescence based on a label such as an enzyme label or a fluorescent label imparted to the target substance in the specimen by using an immunoreaction. Further, before such a detecting process of the target substance, a pre-process such as labeling the target substance in the specimen is performed on the specimen. In some cases, the examination apparatus is configured to automatically execute the pre-process and the detecting process and output the detection result in a case where the pre-process and the detecting process are automated and a specimen collection container accommodating the collected specimen is loaded.

In order to impart a label to the target substance in the specimen, for example, such an automated examination apparatus performs the following process using magnetic particles. First, in the reaction cell, the magnetic particles modified with the first binding substance (for example, the primary antibody) to specifically bind to the target substance (for example, the antigen) and the specimen are mixed with each other. Therefore, the target substance and the first binding substance are bound to each other to generate an immune complex. Thereby, the target substance is captured by the magnetic particles via the first binding substance. Thereafter, the immune complex is separated from the immune complex and a component derived from the specimen (unreacted substance) that does not form the immune complex, that is, so-called bound free (B/F) separation is performed. In a case of the B/F separation, the mixed liquid is suctioned in a state where the magnetic particles are temporarily adsorbed to an inner wall surface of the reaction cell by a magnet disposed outside the reaction cell. Thereafter, the cleaning liquid is discharged to the reaction cell, and the mixed liquid is suctioned and discharged in a state where the cleaning liquid and the magnetic particles are mixed. Therefore, the magnetic particles are cleaned. Next, a labeling reagent including a second binding substance (for example, a secondary antibody) to specifically bind to the target substance and the second binding substance bound to the label are mixed with the magnetic particles. Thereby, the target substance and the second binding substance captured on the magnetic particles via the first binding substance are bound to each other, whereby the sandwich type immune complex, in which the target substance is interposed between the first binding substance and the second binding substance, is generated. Thereafter, the magnetic particles are cleaned again by mixing the cleaning liquid and the magnetic particles for the B/F separation. In a case where the label is an enzyme label, the magnetic particles and the reagent including a luminescent substrate are further mixed and used for the examination process.

In such a manner, the automated examination apparatus is provided with a specimen dispensing unit that suctions the specimen from the specimen collection container and dispenses the specimen to the reaction cell. In order to perform an accurate examination, it is necessary that the specimen has no abnormality such as insufficiency of the amount of specimen or foreign substance mixed into the specimen.

JP2014-504731A proposes an examination apparatus that captures an image of a specimen in a pipette chip, measures a volume of the specimen, and corrects a measurement result in accordance with the volume.

Further, JP2015-200527A proposes an examination apparatus comprising a sensing unit that captures an image of a sample dispensing probe (corresponding to a sampling nozzle) in a state of suctioning and holding a specimen from a sample container (corresponding to a specimen collection container) and detects whether or not a solid larger than an opening surface of an outlet of the sample dispensing probe is attached to a distal end of the sample dispensing probe. In the examination apparatus disclosed in JP2015-200527A, the sample held by the sample dispensing probe is discarded, the specimen is suctioned again from the sample container, and the examination is continued in a case where it is detected that the solid (corresponding to a formed substance) is attached to the distal end of the sample dispensing probe. Further, in the examination apparatus disclosed in JP2015-200527A, in a case where the attachment of the solid is detected, a user is notified that there is a suspicion of abnormality in the sample dispensing.

### SUMMARY OF THE INVENTION

As described above, in JP2015-200527A, a user is notified that there is a suspicion of abnormality in the sample dispensing in a case where the solid is attached to the distal end of the sample dispensing probe. However, the content of the notification is not specified.

The present disclosure has been made in view of the above circumstances, and an object of the present disclosure is to provide an examination apparatus capable of allowing a user to recognize a state of a specimen in a case where the state of the specimen is abnormal.

An examination apparatus according to an aspect of the present disclosure comprises: a detecting unit that detects a target substance in a specimen; a specimen dispensing unit that has a sampling nozzle, through which the specimen is suctioned from a specimen collection container and the specimen is discharged to a reaction cell, and a moving mechanism which moves the sampling nozzle; a nozzle imaging camera that captures an image of the sampling nozzle; a notification unit that has an image display function and issues a notification of an error; and a processor that is configured to control the specimen dispensing unit and the nozzle imaging camera, in which the processor is configured to control the nozzle imaging camera such that the nozzle imaging camera captures an image of the sampling nozzle in a state of holding the specimen after the specimen is suctioned through the sampling nozzle and before the specimen is discharged to the reaction cell and acquires the image of the sampling nozzle from the nozzle imaging camera, determine a state of the specimen on the basis of the image of the sampling nozzle, and cause the notification unit to issue the notification of the error and display the image of the sampling nozzle in a case of determining that the state of the specimen is abnormal.

In the examination apparatus according to the aspect of the present disclosure, the processor may be configured to determine that the state of the specimen is abnormal in a case of detecting insufficiency of a suction amount of the specimen from the image of the sampling nozzle.

In the examination apparatus according to the aspect of the present disclosure, it is preferable that in a case of detecting the insufficiency of the suction amount, the processor is configured to cause the notification unit to display that a content of the error is the insufficiency of the suction amount and to display the suction amount and a predetermined value as the suction amount that should be suctioned in a case where the appropriate suction is performed.

In the examination apparatus according to the aspect of the present disclosure, the processor may be configured to determine that the state of the specimen is abnormal in a case of detecting any of the foreign substance mixed therein, hemolysis, jaundice, or chyle in the specimen in the image of the sampling nozzle.

In the examination apparatus according to the aspect of the present disclosure, it is preferable that the processor is configured to display which of the detected foreign substance mixed therein, the detected hemolysis, the detected jaundice, or the detected chyle is the content of the error in a case of detecting any of the foreign substance mixed therein, the hemolysis, the jaundice, or the chyle.

In the examination apparatus according to the aspect of the present disclosure, it is preferable that the detecting unit detects the target substance by detecting luminescence or fluorescence from a label attached to the target substance by using an antigen-antibody reaction.

According to the technology of the present disclosure, in the examination apparatus, in a case where the state of the specimen is abnormal, it is possible to cause a user to recognize the state of the specimen.

### BRIEF DESCRIPTION OF THE DRAWINGS

Fig. 1 is a schematic diagram showing a configuration of an examination apparatus 10 according to an embodiment.
Fig. 2A is a top view of a cartridge, and Fig. 2B is a front view thereof.
Fig. 3 is a diagram showing a step of imparting a label to a target substance in a reaction cell.
Fig. 4 is a diagram for describing a cleaning step.
Fig. 5 is a diagram showing a positional relationship between a nozzle imaging camera and a sampling nozzle.
Fig. 6 is a schematic diagram of captured images P2A to P2D acquired from the nozzle imaging camera.
Fig. 7 is a diagram showing a display example of a screen of a touch panel display in a case where a suction amount is insufficient.
Fig. 8 is a diagram showing a display example of the screen of the touch panel display in a case of foreign substance mixed therein.
Fig. 9 is a diagram showing a display example of the screen of the touch panel display in a case of hemolysis.
Fig. 10 is a flowchart showing a process step.
Fig. 11 is a diagram showing a modification example of disposition of the nozzle imaging camera.

### DESCRIPTION OF THE PREFERRED EMBODIMENTS

Hereinafter, an examination apparatus according to an embodiment of the present disclosure will be described with reference to the drawings. In each of the drawings, constituent elements represented by the same reference numerals mean the same constituent elements. However, unless otherwise specified in the specification, each constituent element is not limited to one, and each constituent element may be plural.

### "Examination Apparatus of Embodiment"

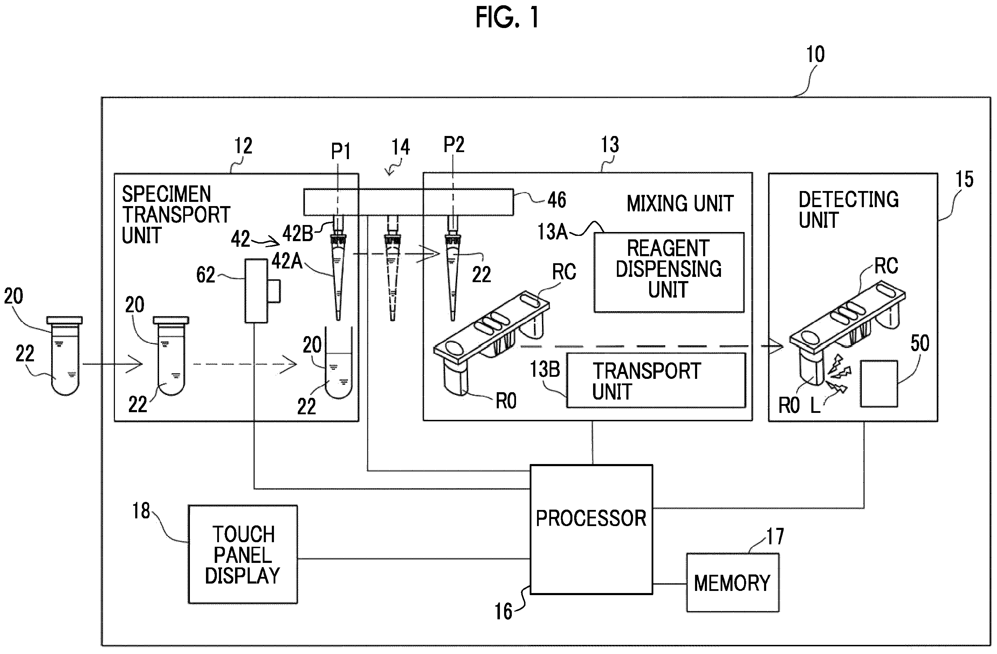

Fig. 1 is a schematic diagram showing a configuration of an immunological analysis apparatus which is an examination apparatus 10 according to one embodiment of the present disclosure. The examination apparatus 10 is an automatic immunological analysis apparatus that performs a pre-process of imparting a label to a target substance that is a substance to be detected in the specimen, performs a detecting process of detecting light from the label, and outputs a detection result, after a specimen collection container that accommodates a specimen collected from a biological body is loaded.

The examination apparatus 10 includes a specimen transport unit 12, a mixing unit 13, a specimen dispensing unit 14, a detecting unit 15, a processor 16, a memory 17, and a touch panel display 18.

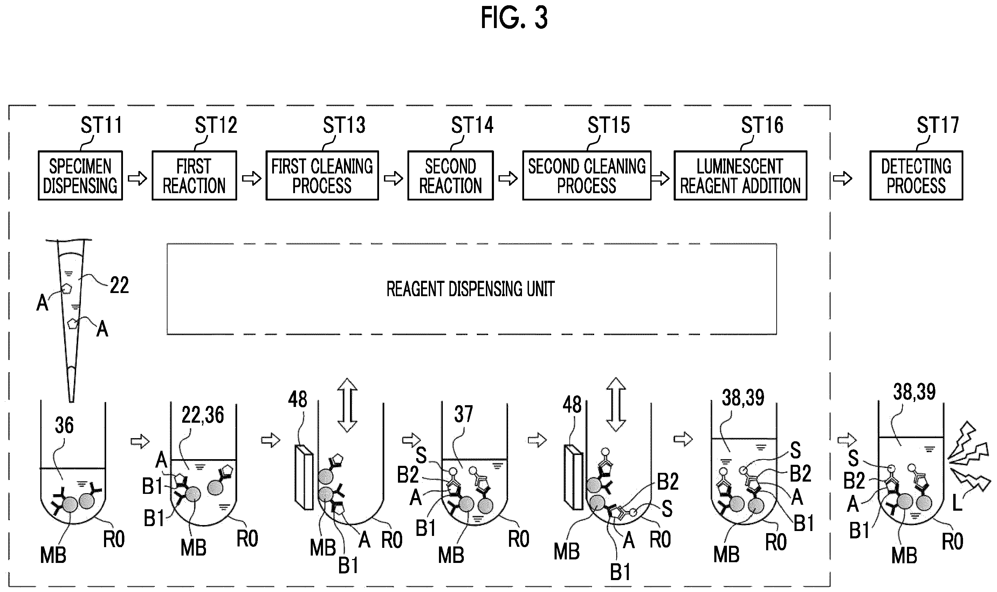

The detecting unit 15 executes a detecting process of detecting a target substance A (refer to Fig. 3 and the like) in a specimen 22. The detecting unit 15 includes a photodetector 50 such as a photomultiplier tube or a photodiode. The photodetector 50 is disposed to face a reaction cell R0 and detects light L caused by a label S bound to the target substance A. In the present example, an enzyme is used as the label S to detect chemiluminescence that is generated by reacting with the luminescent substrate.

A processor 16 integrally controls each unit of the examination apparatus 10. An example of the processor 16 is a central processing unit (CPU) that performs various types of control by executing a program. The CPU functions as a control unit that controls each unit by executing a program.

Further, the processor 16 acquires information about a light amount of the light L detected by the photodetector 50 and calculates a concentration of the target substance A on the basis of the information about the light amount.

A memory 17 is an example of a memory connected to or built into the CPU as the processor 16. For example, the memory 17 stores a control program. In addition to the control program, the memory 17 stores setting information that is preset in order for the processor 16 to perform the various types of control.

Further, the memory 17 stores information indicating a correspondence relationship between the light amount of the light L detected by the photodetector 50 and an amount of the target substance A. The correspondence relationship is stored, for example, as a calibration curve represented by a function. The correspondence relationship may be a format of a table. The processor 16 calculates the amount of the target substance A from, for example, the light amount of the light L, which is acquired from the photodetector 50, and the calibration curve stored in the memory 17.

The touch panel display 18 receives an operation instruction, such as an instruction to start an examination (hereinafter, referred to as an examination start instruction) by a user. Further, the touch panel display 18 displays information such as an examination result.

The specimen transport unit 12 has a loading section (not shown in the drawing) into which a specimen collection container 20 for accommodating the specimen 22 is loaded, and transports the loaded specimen collection container 20 to a position accessible by a sampling nozzle 42 of the specimen dispensing unit 14 to be described later.

The specimen 22 is, for example, a biological fluid such as blood collected from a biological body. Hereinafter, a case where the specimen 22 is blood will be described, but the specimen 22 is not limited to blood. In the present embodiment, the specimen collection container 20 is a blood collection tube. For example, in a case where the blood is whole blood, the whole blood (specimen 22) is subjected to component separation into blood cells and blood plasma or into a blood clot and serum through the centrifugal separation process or the like, and the blood plasma or the serum is used for examination of the target substance. The target substance, which can be included in the specimen 22 and which is a target of the examination, is, for example, an antigen, an antibody, a protein, or a low-molecular-weight compound.

The mixing unit 13 executes a mixing process of mixing the magnetic particles MB and the liquid in the reaction cell R0, the mixing process being performed on the specimen 22 to be used for the detecting process before the detecting process is performed. The mixing process will be described later. The mixing unit 13 includes a loading section (not shown in the drawing) into which a cartridge RC having a plurality of cells including the reaction cell R0 is loaded, and a reagent dispensing unit 13A. The cartridge RC is provided with cells R1 to R4 for accommodating various reagents in addition to the reaction cell R0, and openings 30 to 34 of the cells R1 to R4 are sealed with a sealing film (not shown in the drawing).

The reagent dispensing unit 13Aincludes a perforating nozzle (not shown in the drawing) having a perforating function of piercing the sealing film provided in the cartridge RC to open a hole. The mixing process is performed on the magnetic particles MB in the reaction cell R0 by repeating the suction and discharge of the liquid into which the magnetic particles MB are mixed by the perforating nozzle of the reagent dispensing unit 13A.

Further, the mixing unit 13 includes a transport unit 13B. The transport unit 13B transports the cartridge RC to a location at which each process step in the mixing unit 13 is executed. Further, the transport unit 13B transports the cartridge RC from the mixing unit 13 to the detecting unit 15.

The specimen dispensing unit 14 performs a specimen dispensing process of suctioning the specimen 22 from the specimen collection container 20 and dispensing the specimen 22 to the cartridge RC loaded in the mixing unit 13. The specimen dispensing unit 14 includes a sampling nozzle 42 and a moving mechanism 46 that moves the sampling nozzle 42. The moving mechanism 46 moves the sampling nozzle 42 in a vertical direction (up-down direction) and a horizontal direction. The movements of the sampling nozzle 42 in the vertical direction and the horizontal direction each are performed by a linear actuator as an example.

Further, for example, the sampling nozzle 42 includes a nozzle body 42B and a chip 42A that is interchangeably attached to a distal end of the nozzle body 42B. The distal end of the nozzle body 42B is configured to be aligned with a base end of the chip 42A. The chip 42A is replaced in order to prevent contamination from being caused by a plurality of liquids. The chip 42A is a single-use type and is disposable. The chip 42A of the sampling nozzle 42 is replaced for each specimen 22. In the present embodiment, the mounting of the chip 42A on the distal end of the nozzle body 42B of the sampling nozzle 42 is the same as the mounting of the chip 42A on the distal end of the sampling nozzle 42. The specimen dispensing unit 14 includes a loading section (not shown in the drawing) on which the chip 42A is loaded, and the loaded chip 42A is mounted on the nozzle body 42B of the sampling nozzle 42.

The moving mechanism 46 moves the sampling nozzle 42 in the horizontal direction between the suction position P1 of the specimen transport unit 12 and the dispensing position P2 of the mixing unit 13. The suction position P1 is a position at which the specimen 22 is suctioned from the specimen collection container 20. The dispensing position P2 is a position at which the specimen 22 is discharged to the reaction cell R0 of the cartridge RC which is set in the mixing unit 13.

Further, the moving mechanism 46 moves the sampling nozzle 42 in the vertical direction between an entrance position at which the chip 42A enters the specimen collection container 20 or the reaction cell R0 and a retreat position at which the chip 42A retreats from the specimen collection container 20 or the reaction cell R0 at each of the suction position P1 and the dispensing position P2. The liquid is suctioned and discharged through the sampling nozzles 42 at the entrance position.

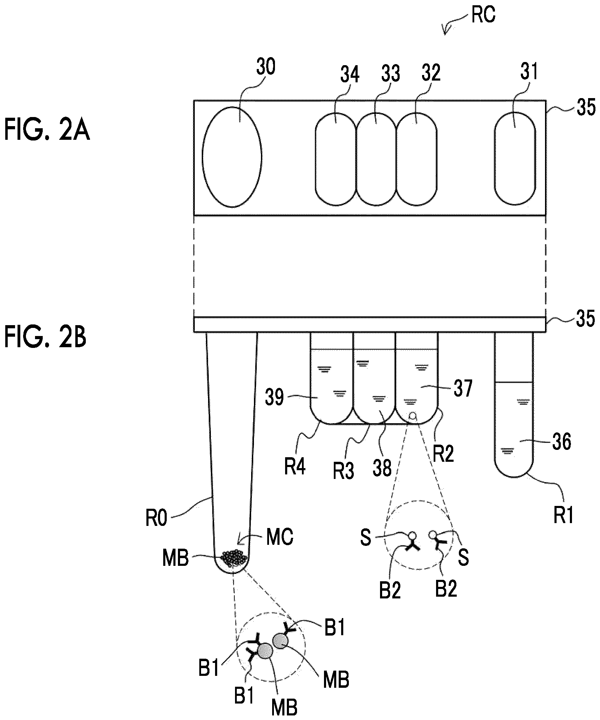

Fig. 2 is a schematic diagram of the cartridge RC, in which Fig. 2A is a top view of the cartridge RC and Fig. 2B is a front view of the cartridge RC. The cartridge RC includes a plate-shaped connection portion 35 having five openings 30 to 34, and five tubular cells R0 to R4 each having one end of each of the openings 30 to 34 and extending downward to include the reaction cell R0. The cartridge RC has a configuration in which a plurality of cells R0 to R4 are integrated by the connection portion 35. Among the plurality of cells R0 to R4, the reaction cell R0 and the cell R1 disposed at both ends are longer than the other cells R2 to R4. The reaction cell R0 is the longest.

Before use, the openings 30 to 34 of the cartridge RC are covered with the sealing film (not shown in the drawing). The cartridge RC is loaded in the examination apparatus 10 in advance, and one cartridge RC is used for one specimen 22.

The specimen 22 is dispensed to the reaction cell R0. The reaction cell R0 is a cell in which a process of imparting the label to the target substance in the specimen 22 is performed. The reaction cell R0 accommodates a lump MC of a plurality of magnetic particles MB modified with the first binding substance B1 to specifically bind to the target substance. In the reaction cell R0, the mixing process of mixing the magnetic particles MB and the liquid is performed. The mixing process of mixing the particles (here, the magnetic particles MB) and the liquid is a process of imparting the label to the target substance in the specimen 22. In a case where the magnetic particles MB each have a spherical shape, a diameter thereof is in a range of 0.1 to 10 µm, preferably 0.1 to 5 µm, and more preferably about 1 to 3 µm.

The cell R1 accommodates a buffer solution 36. The cell R2 accommodates a labeling reagent 37 including the label S in which a second binding substance B2 to specifically bind to the target substance is modified. A first luminescent reagent 38 is accommodated in the cell R3, and a second luminescent reagent 39 is accommodated in the cell R4. In the present example, the label S is an enzyme, and the label S emits light in presence of the first luminescent reagent 38 and the second luminescent reagent 39. The buffer solution 36 in the cell R1, the labeling reagent 37 in the cell R2, the first luminescent reagent 38 in the cell R3, and the second luminescent reagent 39 in the cell R4 are simply referred to as a reagent in a case where it is not necessary to distinguish the respective liquids.

The first binding substance B1 and the second binding substance B2, which specifically bind to the target substance, each are, for example, an antibody against an antigen in a case where the target substance is the antigen, an antigen against an antibody in a case where the target substance is the antibody, and an aptamer against a protein or a low-molecular-weight compound in a case where the target substance is the protein or the low-molecular-weight compound. The first binding substance B1 and the second binding substance B2 may be the same as or may be different from each other.

Here, a process of adding the label to the target substance in the specimen 22 in the reaction cell R0 will be described with reference to Fig. 3. A step surrounded by a broken line in Fig. 3 is a step performed in the mixing unit 13. Fig. 3 schematically shows reaction in the reaction cell R0. Here, a case where the specimen 22 includes the target substance A will be described.

First, the buffer solution 36 accommodated in the cell R1 is dispensed to the reaction cell R0 accommodating the magnetic particles MB modified with the first binding substance B1. Thereafter, the specimen 22 held by the sampling nozzle 42 is dispensed to the reaction cell R0 to which the buffer solution 36 has been dispensed (Step ST11). In the reaction cell R0, the magnetic particles MB, the specimen 22, and the buffer solution 36 are mixed with one another. In the magnetic particles MB, the specimen 22, and the mixed liquid including the buffer solution 36, as the first reaction, a binding reaction, in which the target substance A in the specimen 22 and the first binding substance B1 specifically bind to each other, occurs (Step ST12). For example, in a case where the target substance A is an antigen, the first binding substance B1 is an antibody, and both the target substance A and the first binding substance B1 are bound to each other through an antigen-antibody reaction. In the first reaction, the target substance A in the specimen 22 binds to the first binding substance B1. Therefore, the target substance A is captured by the magnetic particles MB with the first binding substance B1 interposed therebetween.

Next, a first cleaning process (B/F separation) of removing an unreacted substance other than the target substance A, which is captured by the magnetic particles MB, is performed (Step ST13). In Step ST13 in Fig. 3, both arrows in the up-down direction shown at an upper portion of the reaction cell R0 schematically indicate a state where the discharge of the liquid in the reaction cell R0 and the supply of the liquid to the reaction cell R0 are performed.

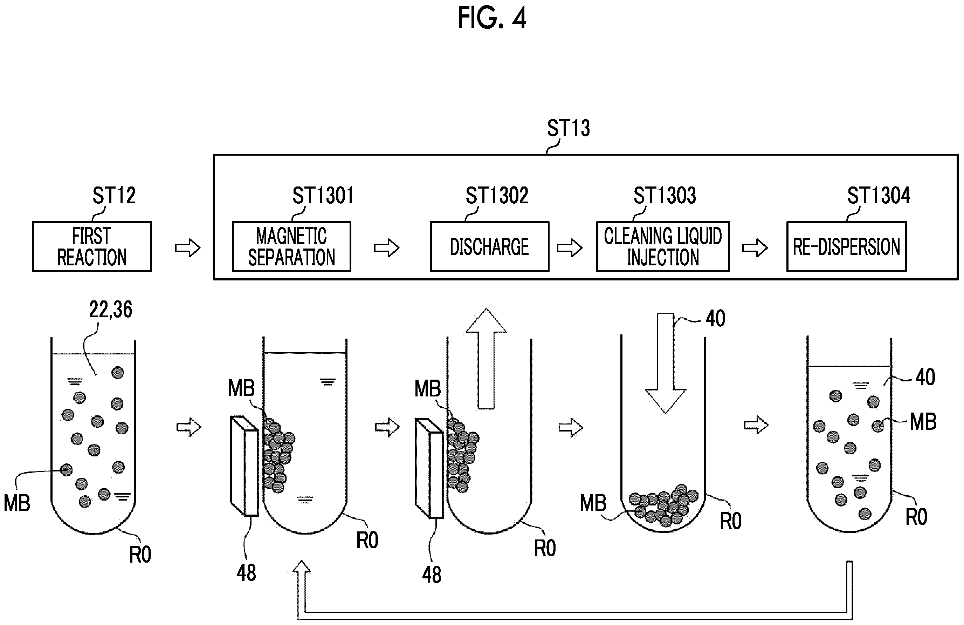

Details of the first cleaning process (Step ST13) will be described with reference to Fig. 4. Fig. 4 does not show the target substance A and the first binding substance B1.

The magnet 48 is disposed close to the outside of the reaction cell R0 in which the first reaction (Step ST12) is completed. Thereby, the magnetic particles MB in the reaction cell R0 are attracted to the magnet 48 and are collected on an inner wall surface of a side wall disposed close to the magnet 48, and magnetic separation of separating the magnetic particles MB and the liquid is performed (Step ST1301).

The liquid in the reaction cell R0 is discharged in a state where the magnetic particles MB are attracted to the inner wall surface of the reaction cell R0 (Step ST1302).

After the liquid is discharged from the reaction cell R0, the reaction cell R0 and the magnet 48 are separated from each other. In such a case, the reaction cell R0 and the magnet 48 are separated from each other such that magnetic force of the magnet 48 does not affect the magnetic particles MB in the reaction cell R0. Then, the cleaning liquid 40 is injected into the reaction cell R0 (Step ST1303).

After the cleaning liquid 40 is injected into the reaction cell R0, the mixed liquid in which the cleaning liquid 40 and the magnetic particles MB are mixed is suctioned and discharged, and the magnetic particles MB are re-dispersed in the cleaning liquid 40 (Step ST1304).

By repeating the steps from the magnetic separation (Step ST1301) to the redispersion (Step 1304) a plurality of times (for example, about 3 times), the unreacted substance other than the target substance A, which is captured by the magnetic particles MB, is removed. The B/F separation is performed by the above-mentioned cleaning step, and the magnetic particles MB and the target substance A, which is captured by the magnetic particles MB, remain in the reaction cell R0.

Returning to Fig. 3, the labeling reagent 37 accommodated in the cell R2 is dispensed to the reaction cell R0 subjected to the B/F separation as described above, and the magnetic particles MB and the labeling reagent 37 are mixed with each other.

In the mixed liquid containing the labeling reagent 37 and the magnetic particles MB, as the second reaction, a binding reaction, in which the target substance A captured by the magnetic particles MB and the second binding substance B2 specifically bind to each other, occurs (Step ST14). Thereby, the target substance A is interposed between the first binding substance B1 and the second binding substance B2, and the label S is applied to the target substance A with the second binding substance B2 interposed therebetween. For example, in a case where the target substance A is an antigen, the second binding substance B2 is an antibody, and both of the antigen and antibody are bound to each other through the antigen-antibody reaction. That is, in such a case, the label S is applied to the target substance A by using the antigen-antibody reaction.

Next, a second cleaning step (B/F separation) of removing the unreacted substance other than the second binding substance B2 which is bound to the target substance A and captured by the magnetic particles MB in the labeling reagent 37 is performed (Step ST15). In the second cleaning process (Step ST15), the two-way arrow in the up-down direction shown above the reaction cell R0 schematically indicates a state where the liquid in the reaction cell R0 is discharged and the liquid is supplied to the reaction cell R0, as in a case of Step ST13.

The second cleaning process (Step ST15) is performed in the same manner as the cleaning step performed in the first cleaning process (Step ST13). That is, the magnetic separation is performed by disposing the magnet 48 close to the outside of the reaction cell R0, the liquid in the reaction cell R0 is discharged, the cleaning liquid 40 is injected, and the magnetic particles MB are re-dispersed in the cleaning liquid 40 (refer to Fig. 4). Even in the second cleaning process (Step ST15), the step from magnetic separation to redispersion is repeated a plurality of times (for example, about 3 times). Thereby, the unreacted substance other than the label S applied to the target substance A, which is captured by the magnetic particles MB, is removed. The B/F separation is performed by the second cleaning process, and the magnetic particles MB, the target substance A, which is captured by the magnetic particles MB, and the label S, which is imparted to the target substance A, remain in the reaction cell R0.

The above-mentioned steps are steps of performing a process of imparting the label S to the target substance A in the specimen 22.

Thereafter, the first luminescent reagent 38 accommodated in the cell R3 and the second luminescent reagent 39 accommodated in the cell R4 are added to the reaction cell R0 (Step ST16). Thereby, the magnetic particles MB, the first luminescent reagent 38, and the second luminescent reagent 39 are mixed with one another.

The above-mentioned steps are a pre-process performed on the specimen 22 in the reaction cell R0 in the mixing unit 13.

The mixing unit 13 performs the above-mentioned pre-process, and the reagent dispensing unit 13A suctions and discharges various liquids. For example, as described above, the cleaning liquid 40 is suctioned from the cleaning liquid accommodating portion that accommodates the cleaning liquid 40, and the suctioned cleaning liquid 40 is discharged to the reaction cell R0, or each of the reagents is suctioned from each of the cells R1 to R4, and the suctioned reagent is discharged to the reaction cell R0.

The cartridge RC, on which the above-mentioned pre-process is completed, is transported to the detecting unit 15 by the transport unit 13B and is subjected to the detecting process in the detecting unit 15. In the reaction cell R0, the label S, which is imparted to the target substance A, reacts with the first luminescent reagent 38 and the second luminescent reagent 39, which are the luminescent substrates added in Step ST16, to generate chemiluminescence L. The photodetector 50 detects the chemiluminescence L.

As shown in Fig. 1, the examination apparatus 10 includes a nozzle imaging camera 62 that captures an image of the sampling nozzle 42 on which the chip 42A is mounted. The nozzle imaging camera 62 captures an image of the sampling nozzle 42 after the specimen 22 is suctioned through the sampling nozzle 42 and before the specimen 22 is discharged to the reaction cell R0. That is, the nozzle imaging camera 62 captures an image of the sampling nozzle 42 in a state of holding the specimen 22.

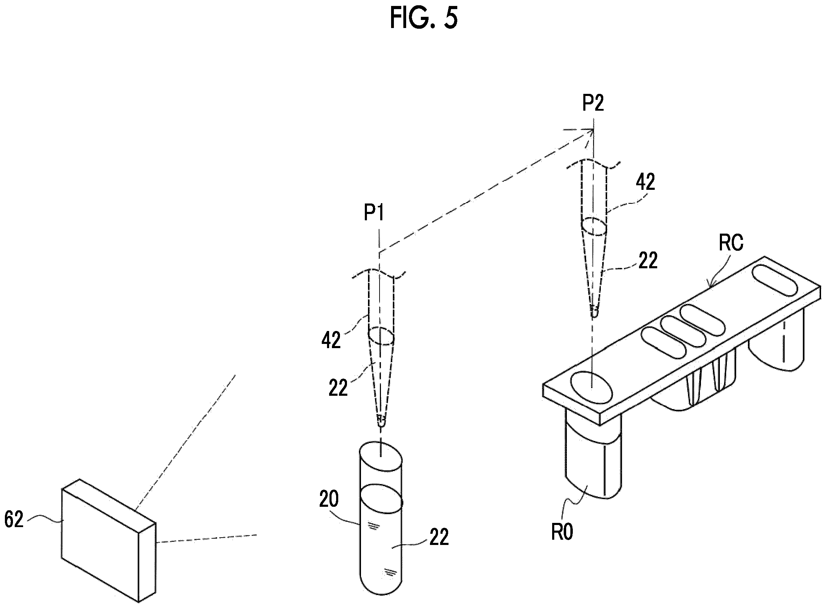

The nozzle imaging camera 62 may be disposed to be able to capture an image of the sampling nozzle 42 after the specimen 22 is suctioned through the sampling nozzle 42 and before the specimen 22 is dispensed. In the present embodiment, as shown in Fig. 5, the nozzle imaging camera 62 is disposed to be able to capture an image of the sampling nozzle 42 positioned above the specimen collection container 20 at the suction position P1.

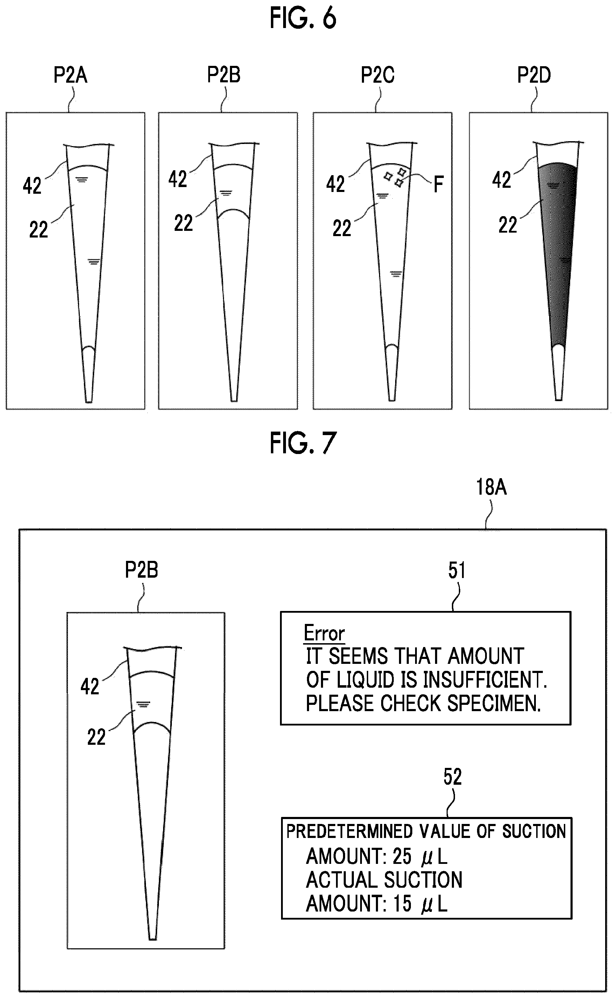

The processor 16 determines the state of the specimen 22 in the sampling nozzle 42 on the basis of the image of the sampling nozzle 42 which is acquired from the nozzle imaging camera 62. Then, in a case where the processor 16 determines that the state of the specimen 22 is abnormal, the processor 16 displays an error message on the touch panel display 18 and displays the image of the sampling nozzle 42 (refer to Figs. 7 to 9). That is, the touch panel display 18 is a notification unit that issues a notification of an error and functions as a notification unit having an image display function.

In a case where the processor 16 determines that the state is abnormal, the processor 16 may display the error message and the image on the touch panel display 18 and may automatically end the examination, or may end or continue the examination in response to an instruction provided from the user.

In contrast, in a case where the processor 16 determines that the state of the specimen 22 is normal, the specimen dispensing unit 14 discharges the specimen 22 to the reaction cell R0. Thereafter, the mixing process in the mixing unit 13 is performed on the specimen 22, and the detecting process in the detecting unit 15 is performed on the specimen 22.

As the determination of the state of the specimen 22, it is determined whether the specimen 22 is in a normal state where the specimen 22 can be used for the detecting process or in an abnormal state. Examples of the parameter for determining that the state of the specimen 22 is normal include the following (1) to (3).
(1) An amount (suction amount) of the suctioned specimen 22 satisfies a prescribed value.
(2) No foreign substance is mixed into the specimen 22.
(3) There is no hemolysis, jaundice, or chyle in the specimen 22.

In the processor 16, for example, it is determined that the state of the specimen 22 is normal (that is, the specimen 22 is normal) in a case where all of (1) to (3) are satisfied, and it is determined that the state of the specimen 22 is abnormal (that is, the specimen 22 is abnormal) in a case where at least one of (1) to (3) is not satisfied.

It should be noted that the determination parameters for determining the state of the specimen can be appropriately set in accordance with the examination item or the examination apparatus. Thus, it can be determined that the state is normal in a case where the determination parameters satisfy (1), or it can be determined that the state is normal in a case where the determination parameters satisfy (1) and (2). Further, parameters other than (1) to (3) can also be adopted.

In the present embodiment, in a case of detecting the insufficiency of the suction amount of specimen 22 from the image of the sampling nozzle 42, the processor 16 determines that the state of the specimen 22 is abnormal. Further, in a case of detecting any of the foreign substance mixed therein, the hemolysis, the jaundice, or the chyle in the specimen 22 from the image of the sampling nozzle 42, the processor 16 determines that the state of the specimen 22 is abnormal.

Fig. 6 is a diagram schematically showing images P2A to P2D of the sampling nozzles 42 captured by the nozzle imaging camera 62. The specimen 22 in the image P2A is in a normal state where the suction amount satisfies the prescribed value and no foreign substance or the like is mixed therein. The specimen 22 in the image P2B is in an abnormal state where the suction amount is less than the prescribed value. The specimen 22 in the image P2C is in an abnormal state where the specimen 22 includes the foreign substance F. The specimen 22 in the image P2D is in an abnormal state where hemolysis has occurred.

Examples of the method of determining whether or not the suction amount satisfies the predetermined value include a method of obtaining an upper end position, a lower end position, and a distance between the upper and lower ends of the specimen 22 from an image of the sampling nozzle 42 holding the specimen 22, calculating the suction amount from the values, and determining that the suction amount is normal in a case where the calculated suction amount is equal to or greater than the prescribed value and the suction amount is abnormal in a case where the calculated suction amount is less than the prescribed value. The upper end position and the lower end position of the specimen 22 can be detected, for example, from fluctuation in luminance value of the sampling nozzle 42 in the length direction (up-down direction). The memory 17 may store, in advance, the predetermined value of the suction amount as setting information. For example, a necessary amount for the detecting process is set as the predetermined value of the suction amount, such as 25 µL.

In a case of detecting the insufficiency of the suction amount, as shown in Fig. 7, the processor 16 displays the image P2B of the sampling nozzle 42 on the screen 18A of the touch panel display 18 and displays that the content of the error is the insufficiency of the suction amount. As shown in Fig. 7, for example, a phrase "It seems that an amount of liquid is insufficient. Please check the specimen." is displayed as a message 51. The processor 16 may further display, in the region 52, the actual suction amount and the predetermined value as a suction amount that should be suctioned in a case where the appropriate suction is performed.

In a case where the processor 16 detects the insufficiency of the suction amount, the examination apparatus 10 displays, as an example, the message 51 prompting a user to check the specimen 22 and to perform the re-examination, as described above.

The user who has checked the image P2B, the error message, and the like checks the specimen collection container 20. Then, in a case where an amount of the specimen 22 is sufficient, the user takes an action such as inputting an execution command, which is for the re-examination of starting from the suction of the specimen, through the touch panel display 18. The examination apparatus 10 may be configured to automatically suction the specimen 22 again from the specimen collection container 20 and to start the re-examination while displaying the image P2B of the sampling nozzle 42 and the error message indicating that the suction amount is insufficient on the touch panel display 18.

Examples of the method of determining whether or not a foreign substance F is mixed into the specimen 22 include a method of detecting fluctuation in luminance value in the length direction (up-down direction) of the sampling nozzle 42 in the image of the sampling nozzle 42 holding the specimen 22 and determining that there is a foreign substance in a case where there is a portion in which the predetermined fluctuation in luminance value in the specimen 22 is equal to or greater than a threshold value and determining that there is no foreign substance in a case where there is no portion in which fluctuation is equal to or greater than the threshold value.

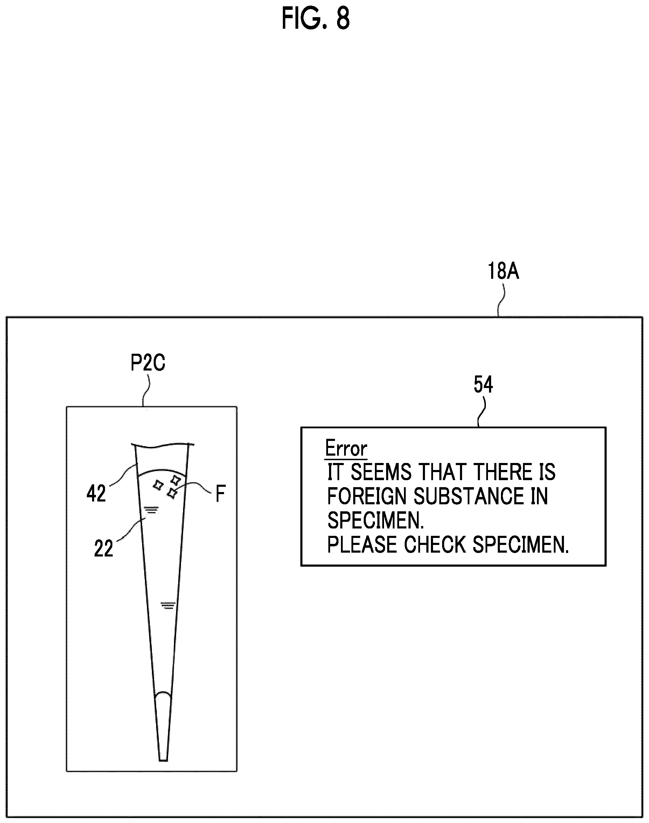

In a case where the foreign substance mixed therein is detected, as shown in Fig. 8, the processor 16 displays the image P2C of the sampling nozzle 42 on the screen 18A of the touch panel display 18 and displays that the content of the error is the foreign substance mixed therein. As shown in Fig. 8, for example, a phrase "It seems that there is a foreign substance in the specimen. Please check the specimen." is displayed as a message 54.

In a case where a foreign substance is mixed into the specimen 22, the user takes out the specimen collection container 20 from the examination apparatus 10 and performs a process such as the centrifugal separation process again to take action against the situation, and reloads the specimen collection container 20 into the examination apparatus 10 to perform re-examination.

In a case where the specimen 22 is blood, a centrifugal separation process is performed, and a serum is used for the examination, the serum is originally a yellow transparent liquid. In contrast, in a case where the specimen 22 is hemolysis, a color of the specimen 22 is redder than that in a normal case. In a case of j aundice, the color of the specimen 22 is darker yellow than that in the normal case. Further, in a case of chyle, the color of the specimen 22 is more turbid than that in the normal case. Therefore, examples of the method of determining presence or absence of hemolysis, jaundice, and chyle in the specimen 22 include a method of determining presence or absence of hemolysis, jaundice, and chyle in the specimen 22 on the basis of the color of the specimen 22 in the image of the sampling nozzle 42 holding the specimen 22.

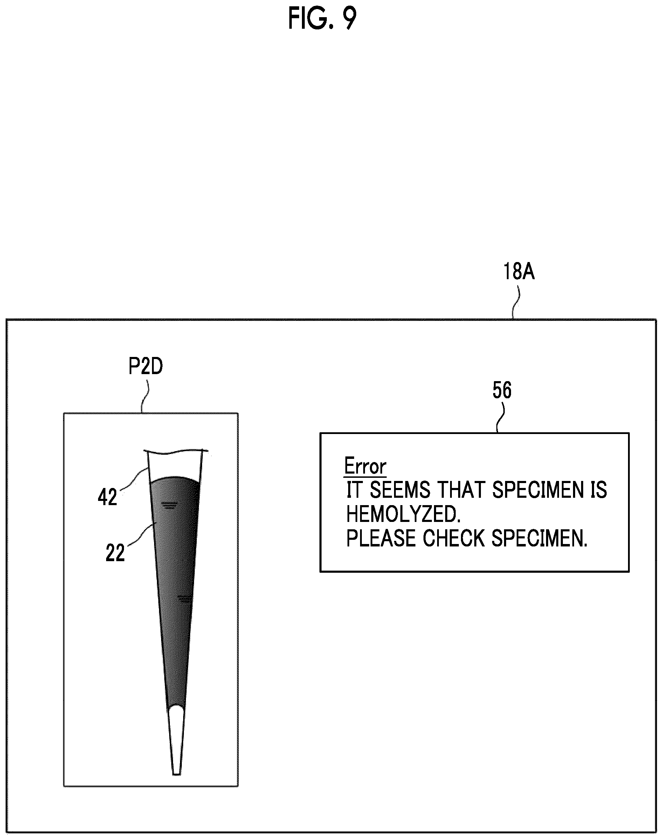

In a case of detecting hemolysis, jaundice, or chyle in the specimen 22, as shown in Fig. 9, the processor 16 displays the image P2D of the sampling nozzle 42 on the screen 18A of the touch panel display 18, and displays that the content of the error is hemolysis, jaundice, or chyle. As shown in Fig. 9, for example, in a case of hemolysis, a phrase "It seems that the specimen is hemolyzed. Please check the specimen." is displayed as a message 56.

For example, in a case where the specimen 22 is hemolyzed, the hemolytic component may inhibit the antigen-antibody reaction. Therefore, as an example, an action of performing the examination by diluting the specimen with water to reduce the inhibitory factor is taken. The user who has checked the image P2D, the error message, and the like takes an action such as diluting the specimen and inputting an execution command for the re-examination through the touch panel display 18. The examination apparatus 10 may be configured to display the image P2D of the sampling nozzle 42 and the error message indicating that there is hemolysis on the touch panel display 18, automatically dilute the specimen 22, and then start the re-examination. It should be noted that in a case where the specimen 22 is diluted, the detection result is corrected in accordance with a dilution ratio thereof.

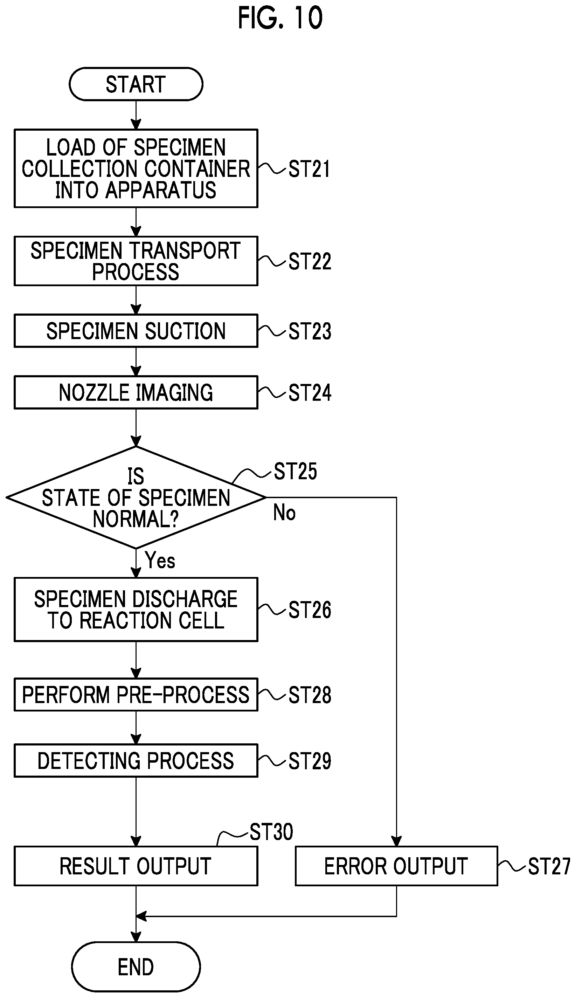

An example of an examination flow in the examination apparatus 10 will be described with reference to Fig. 10.

A user loads the specimen collection container 20 into the examination apparatus 10 (Step ST21). Then, in a case where the processor 16 receives an instruction to start the examination through the touch panel display 18, the processor 16 starts the process of the examination.

First, the processor 16 transports the specimen collection container 20 to a position at which the sampling nozzle 42 is able to access in the specimen transport unit 12 (Step ST22).

Next, the processor 16 controls the specimen dispensing unit 14 such that the specimen dispensing unit 14 inserts the sampling nozzle 42 into the specimen collection container 20 and suctions the specimen 22 (Step ST23).

The processor 16 controls the nozzle imaging camera 62 such that the nozzle imaging camera 62 captures an image of the sampling nozzle 42 in a state where the sampling nozzle 42 holds the specimen 22 (Step ST24).

The processor 16 acquires the image of the sampling nozzle 42 in a state of holding the specimen 22 from the nozzle imaging camera 62, and determines the state of the specimen 22. Then, in a case where it is determined that the state of the specimen 22 is normal (Step ST25: Yes), the specimen 22 is discharged from the sampling nozzle 42 to the reaction cell R0 (Step ST26). In contrast, in a case of determining that the state of the specimen 22 is abnormal (Step ST25: No), the processor 16 displays a message indicating that the state of the specimen 22 is abnormal and the image of the sampling nozzle 42 on the screen 18A of the touch panel display 18 as the error output (Step ST27), and ends the examination.

The processor 16 controls the mixing unit 13 such that the mixing unit 13 performs a pre-process (Step ST28). Here, the pre-process performed in the mixing unit 13 includes steps ranging from the first reaction (Step ST12) to the luminescent reagent addition (Step ST16) shown in Fig. 3.

After the pre-process is completed, the processor 16 executes the detecting process in the detecting unit 15 (Step ST29). In the detecting unit 15, the photodetector 50 detects the light L caused by a label L generated from the reaction cell R0.

The processor 16 calculates a concentration of the target substance A in the specimen 22 on the basis of the information about the light amount acquired from the photodetector 50. The touch panel display 18 displays a message indicating the examination result (Step ST30), and the examination ends.

In the examination apparatus that executes the detecting process of detecting the target substance A in the specimen 22, in a case where the specimen 22 to be examined is abnormal, the reliability of the examination result may be reduced.

For example, in a case where the suction amount of specimen 22 suctioned into the sampling nozzle 42 is less than the predetermined value, the amount of specimen 22 to be discharged to the reaction cell R0 is less than the predetermined value. In a case where the suction amount is small, the amount of the target substance A in the specimen is also relatively small, and in a case where the concentration with respect to a predetermined amount of the specimen 22 is output as the examination result, a concentration lower than an original concentration is output as the detection result.

Further, in a case where the foreign substance F is mixed into the specimen 22 suctioned into the sampling nozzle 42, the binding between the target substance A and the first binding substance B1 in the first reaction may be inhibited, and the amount of the target substance A, which is captured by the magnetic particles MB, is likely to be less than the original amount. Therefore, the detection amount of the target substance A obtained as the examination result may be lower than the amount of the target substance A originally included in the specimen 22.

In a case where the specimen 22 suctioned into the sampling nozzle 42 is hemolyzed, chylified, or jaundiced, it means that an extra component is mixed therein. Thus, the detection result may be affected in accordance with the type of the target substance A.

In such a manner, in a case where the state of the specimen 22 is abnormal, the concentration of the target substance A detected by the detecting process may be different from the actual concentration.

However, as described above, the examination apparatus 10 includes the nozzle imaging camera 62 that captures an image of the sampling nozzle 42 in a state of holding the specimen 22. The processor 16 determines the state of the specimen 22 on the basis of the image of the sampling nozzle. Then, in a case where the processor 16 determines that the state of the specimen is abnormal, the processor 16 causes the notification unit (here, the touch panel display 18) to issue the notification of the error and to display the image of the sampling nozzle 42. With such a configuration, it is possible to exclude the specimen 22 from which an examination result with high accuracy cannot be obtained in a case where the specimen 22 is abnormal. As a result, it is possible to improve the reliability of the examination result. Further, since the image of the sampling nozzle 42 is displayed on the notification unit having an image display function, such as the touch panel display 18, a user is able to easily recognize the state of the specimen. The user is able to visually understand the error factor easily and take a measure corresponding to the error factor.

The display of the error message on the touch panel display 18 and the display of the image of the sampling nozzle 42 may be performed simultaneously or sequentially. However, it is preferable that the error message and the display of the image are simultaneous because the user is able to more easily recognize the error factor.

As described above, even in a case where it is determined that the state of the specimen 22 is abnormal, for example, in a case where the type of the abnormality is hemolysis, jaundice, or chyle, the examination item (type of the target substance A) may not be affected. Therefore, even in a case of determining that the state of the specimen 22 is abnormal, the processor 16 may continue to perform the mixing process and the detecting process without ending the examination. Alternatively, as already described, the processor 16 may be configured to automatically perform re-measurement.

In the examination apparatus 10 of the present embodiment, in a case of detecting the insufficiency of the suction amount of specimen 22 from the image of the sampling nozzle 42, the processor 16 determines that the state of the specimen is abnormal. With such a configuration, it is possible to suppress occurrence of the detection error due to the insufficiency of the suction amount and to perform a highly reliable examination.

Further, in the examination apparatus 10, in a case where the processor 16 detects the insufficiency of the suction amount, the touch panel display 18, which is an aspect of the notification unit, displays that the content of the error is the insufficiency of the suction amount and displays the suction amount and the predetermine value of the suction amount in a case where the appropriate suction is performed. Thereby, it is possible to make the user more specifically recognize the error content. The user is able to determine whether or not the user is able to take action against the situation through re-suctioning or whether or not it is necessary to collect blood again.

In the examination apparatus 10 according to the present embodiment, in a case of detecting any of the foreign substance mixed therein, hemolysis, jaundice, or chyle in the image of the sampling nozzle 42 with respect to the specimen 22, the processor 16 determines that the state of the specimen is abnormal. With such a configuration, it is possible to suppress occurrence of a detection error that occurs in a case where the examination is performed on the specimen in a state where the specimen has abnormality such as foreign substance mixed therein. Thus, it is possible to perform a highly reliable examination.

Further, in the examination apparatus 10, in a case of detecting any of foreign substance mixed therein, hemolysis, jaundice, or chyle, the processor 16 displays which of the detected foreign substance mixed therein, hemolysis, jaundice, or chyle is the content of the error. Thereby, it is possible to make the user more specifically recognize the error content. The user is able to determine whether or not to continue the examination as it is, whether or not it is possible to take action against the situation through re-suctioning of the specimen, whether or not it is necessary to perform the process on the specimen, whether or not it is necessary to collect blood again, and the like.

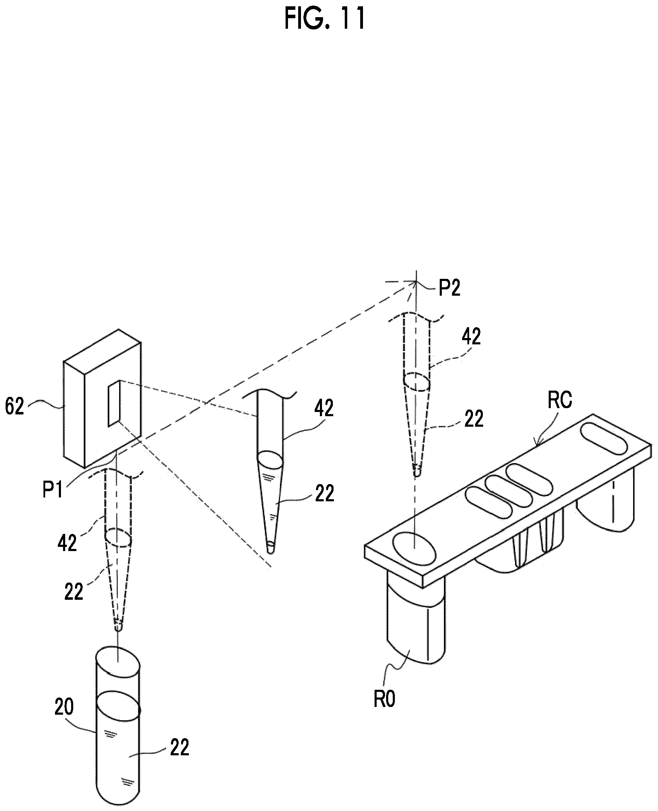

In the above-mentioned embodiment, the nozzle imaging camera 62 is disposed at a position at which the image of the sampling nozzle 42 positioned at the suction position P1 can be captured, and captures an image of the sampling nozzle 42 through which the specimen 22 is suctioned at the suction position P1. However, the nozzle imaging camera 62 may be disposed at a position capable of capturing the image of the sampling nozzle 42 in a state of holding the specimen 22 after the specimen 22 is suctioned and before the specimen 22 is discharged. Further, as shown in Fig. 11, the nozzle imaging camera 62 may be disposed at a position capable of capturing the image of the sampling nozzle 42 positioned between the suction position P1 and the dispensing position P2. In such a case, it is preferable that the nozzle imaging camera 62 captures an image of the sampling nozzle 42 which is being moved by the moving mechanism 46. In a case where the nozzle imaging camera 62 captures an image of the sampling nozzle 42 which is being moved by the moving mechanism 46, a time for stopping the sampling nozzle 42 for imaging is not necessary. Therefore, the throughput can be increased.

In each of the embodiments, the examination apparatus that detects the target substance by detecting luminescence or fluorescence from the label attached to the target substance by using the antigen-antibody reaction has been described. However, the invention of the present disclosure can also be applied to an examination apparatus that performs the biochemical analysis by using a reaction other than the antigen-antibody reaction.

In each of the above-mentioned embodiments, as hardware structures of processing units that execute various types of process as the internal configuration of the processor 16, the following various processors can be used. The various processors include, for example, a CPU which is a general-purpose processor executing software to function as various processing units as described above, a programmable logic device (PLD), such as a field programmable gate array (FPGA), which is a processor whose circuit configuration can be changed after manufacture, or a dedicated electric circuit, such as an application specific integrated circuit (ASIC), which is a processor having a dedicated circuit configuration designed to perform a specific process.

One processing unit may be constituted by one of the various processors, or may be a combination of two or more processors of the same type or different types (for example, a combination of a plurality of FPGAs and/or a combination of a CPU and an FPGA). The plurality of processing units may be configured of one processor.

As an example of the plurality of processing units composed of one processor, first, as represented by computers such as a client and a server, there is a form in which one processor is composed of a combination of one or more CPUs and software and this processor functions as a plurality of processing units. A second example of the configuration is an aspect in which a processor that implements the functions of the whole system including a plurality of processing units using one integrated circuit (IC) chip is used. A representative example of this aspect is a system-on-chip (SoC). As described above, the various processing units are configured using one or more of the various processors as the hardware structure.

More specifically, a circuitry combining circuit elements such as semiconductor elements may be used as the hardware structure of the various processors.

The present disclosure is not limited to the above-mentioned embodiments, and can be implemented with appropriate modifications, such as omitting a configuration or replacing a configuration with a different configuration within the scope that does not deviate from the gist of the present disclosure.

The disclosure of JP2022-043031 filed on March 17, 2022 is incorporated herein by reference in its entirety.

All documents, patent applications, and technical standards described in the present specification are incorporated into the present specification by reference to the same extent as in a case where the individual documents, patent applications, and technical standards were specifically and individually stated to be incorporated by reference.

## Claims

1. An examination apparatus comprising:
a detecting unit that detects a target substance in a specimen;
a specimen dispensing unit that has a sampling nozzle, through which the specimen is suctioned from a specimen collection container and the specimen is discharged to a reaction cell, and a moving mechanism which moves the sampling nozzle;
a nozzle imaging camera that captures an image of the sampling nozzle;
a notification unit that has an image display function and issues a notification of an error; and
a processor that is configured to control the specimen dispensing unit and the nozzle imaging camera,
wherein the processor is configured to
control the nozzle imaging camera such that the nozzle imaging camera captures an image of the sampling nozzle in a state of holding the specimen after the specimen is suctioned through the sampling nozzle and before the specimen is discharged to the reaction cell and acquires the image of the sampling nozzle from the nozzle imaging camera,
determine a state of the specimen on the basis of the image of the sampling nozzle, and
cause the notification unit to issue the notification of the error and display the image of the sampling nozzle in a case of determining that the state of the specimen is abnormal.

2. The examination apparatus according to claim 1,
wherein the processor is configured to determine that the state of the specimen is abnormal in a case of detecting insufficiency of a suction amount of the specimen from the image of the sampling nozzle.

3. The examination apparatus according to claim 2,
wherein in a case of detecting the insufficiency of the suction amount, the processor is configured to cause the notification unit to display that a content of the error is the insufficiency of the suction amount and to display the suction amount and a predetermined value as the suction amount that should be suctioned in a case where the appropriate suction is performed.

4. The examination apparatus according to claim 1,
wherein the processor is configured to determine that the state of the specimen is abnormal in a case of detecting any of the foreign substance mixed therein, hemolysis, jaundice, or chyle in the specimen in the image of the sampling nozzle.

5. The examination apparatus according to claim 4,
wherein the processor is configured to display which of the detected foreign substance mixed therein, the detected hemolysis, the detected jaundice, or the detected chyle is the content of the error in a case of detecting any of the foreign substance mixed therein, the hemolysis, the jaundice, or the chyle.

6. The examination apparatus according to any one of claims 1 to 5,
wherein the detecting unit detects the target substance by detecting luminescence or fluorescence from a label attached to the target substance by using an antigen-antibody reaction.
